Europäisches Patentamt

European Patent Office

Office européen des brevets

(19)

(11) Publication number: **0 178 111**
A2

(12)
# EUROPEAN PATENT APPLICATION

(21) Application number: 85306992.0

(51) Int. Cl.⁴: **H 04 M 3/50**, H 04 M 1/272

(22) Date of filing: 01.10.85

(30) Priority: 03.10.84 GB 8424892

(43) Date of publication of application: 16.04.86 Bulletin 86/16

(84) Designated Contracting States: **AT BE CH DE FR IT LI LU NL SE**

(71) Applicant: **International Standard Electric Corporation, 320 Park Avenue, New York New York 10022 (US)**

(72) Inventor: **Walsh, William Arthur George, 28 Heathgate, Hertford Heath Hertfordshire (GB)**

(74) Representative: **Vaufrouard, John Charles, ITT Patent Department UK Maidstone Road Foots Cray, Sidcup KentDA14 5HT (GB)**

(54) Data handling system.

(57) In a telecommunications system in which much of the addressing information needed for call-setting is relatively complex, a directory storage unit (DSU) (which may be replicated in the interests of system integrity) is provided which serves the whole system which may include a number of exchanges (E1, E2, ...). When a call which needs such information is to be made, the initial «dialling» by the calling subscriber sets up a connection (1) to the directory storage unit (DSU) as a result of which the appropriate addressing information is sent to the caller's terminal. At the caller's terminal it is stored temporarily, with protocol addition as necessary and the connection to the directory storage unit (DSU) is broken down. A new and separate connection (2) is now set up to the wanted line under control of the information from the directory storage unit.

## DATA HANDLING SYSTEM

This invention relates to a data handling system which may form part of an automatic telecommunication system.

The integration of telecommunication and related services on public and private networks presents problems of addressing due to the varying numbers of digits needed, and also to the need to insert the appropriate parts of the address into the correct fields of the protocol. The term "address" as used herein refers to the combination of digits needed to control the establishment of a wanted connection via the switching network. Electric directories, which are in effect the logical extension of the well-known translators as used in the Director system, are being implemented by some telephone administrations mainly for normal telephony purposes. They allow a subscriber to access a database to find a wanted number. In such a system, each subscriber with the facility of access to the database has a screen on which the appropriate number can be displayed.

An object of this invention is to extend the usefulness of systems such as those referred to above.

According to the invention, there is provided a data handling system, which includes a directory storage unit accessible to a number of user's lines, in which to obtain the information which may include the address of a wanted line or other termination a calling user sets up a connection through the system to the directory storage unit and signals thereto the identity of the information required, in which in response to the reception of the identity signals the directory storage unit transmits the required information to a storage device associated with the system control equipment, whereafter the connection to the directory storage unit is broken down, and in which in response to the reception of the required information in the storage device a connection is set up in respect of the required address, either immediately or at a desired but later time, or other operations appropriate to that information are performed.

According to a more specific application of the invention, there is provided an automatic telecommunication system which includes a directory storage unit accessible to a number of subscribers' lines which may be connected to the same exchange or to a number of exchanges in the system, in which to obtain the address of a wanted line or other termination connected to the system a calling subscriber sets up a connection through the system to the directory storage unit and signals thereto the identity of the wanted line or other termination, in which in response to the reception of the identity signals the directory storage unit signals thereto the identity of the wanted line or other termination, in which in response to the reception of the identity signals the directory storage unit transmits the required address to a storage device in the system control equipment, whereafter the connection to the directory storage unit is broken down, and in which in response to the reception of the required address in the storage device a connection is set up in respect of said required address, either immediately or at a desired but later time.

Thus the operations of the known types of system referred to are extended such as to remove the manual operation of inserting the address information for call setting into the system. Hence the directory number is either stored for future use, or inserted directly into the call set up procedure. The system can also be used for message handling or electronic mail, where the address may be defined geographically as in a normal letter. It will be seen that in the telecommunications application, a subscriber can make a call by first obtaining the wanted number from the directory storage unit, and then having the required connection set up automatically with a minimum of additional interference by the calling user.

In order that the invention and its various other preferred features may be understood more easily, some embodiments will now be described, by way of example only, with reference to the drawings, in which;-

Figure 1 is an example of a telecommunications network embodying the present invention,

Figures 2 and 3 are flow diagrams explanatory of the invention,

Figure 4 shows the application of the present invention to a system with ISDN access, and

Figure 5 is a functional block diagram of a subscriber's terminal in a system embodying the invention.

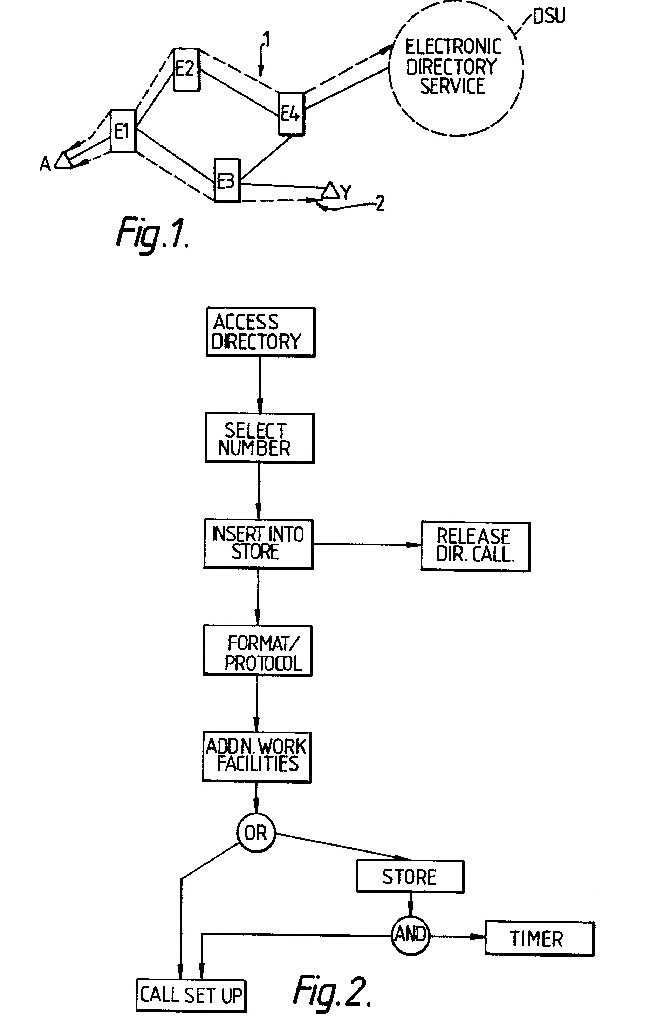

As shown in Figure 1, when the invention is used in a telephone exchange network with a number of separate exchanges E1, E2, E3, E4, there is a single electronic directory storage unit DSU which is available for use by all subscribers served by the network. Thus when a subscriber A, connected to the exchange E1, wishes to make a call for which the services of the unit DSU are needed, he "dials" a special code for the DSU as a result of which a first call is set up from the caller A to the DSU. This call is indicated by the broken line 1.

When the first call has been set up, the caller receives a "proceed to send" signal, and he then sends the identity code for the wanted line, in this case line Y connected to exchange E3. In response to this the DSU emits the address for line Y, which is received and displayed at subscriber A's terminal. The connection 1 from subscriber A to the DSU is now released. Subscriber A, if the call is to be set up immediately, depresses a push-button as a result of which the call is set up under the control of the address which has been received from the DSU. This connection from A to Y is indicated at 2.

Note that the signals needed to set up a connection to Y will vary dependent on which exchange the caller is connected to; the DSU can be programmed to take account of this and to issue different addresses dependent on the identity of the caller's exchange. There are a number of ways by which this information can be made available to the DSU, e.g. by an exchange code signal automatically sent from a caller's terminal to the DSU in response to the completion of a connection to the DSU.

Having briefly described the operation with reference to Figure 1, there now follows a listed account of the procedure involved in setting up a telephone call where the services of the DSU are required.

(i)     Access the directory service as described above, which causes the caller's terminal to display the required address.

(ii)    By means of cursor, light pen or other means (e.g. a "proceed" push-button, the displayed information is placed electronically into memory. There it is assembled and if necessary converted (as in a register-controller), if necessary, into the appropriate format/protocol for call set up. Facilities required of the network are added either automatically or manually.

(iii)   The directory call (call 1, Figure 1) is now dropped.

(iv)    The required connection is now made merely by operating a function key, or the information can be stored and the call set up automatically under the control of a timing device.

Such call setting procedure is indicated in a summarised manner in the flow diagram, Figure 2.

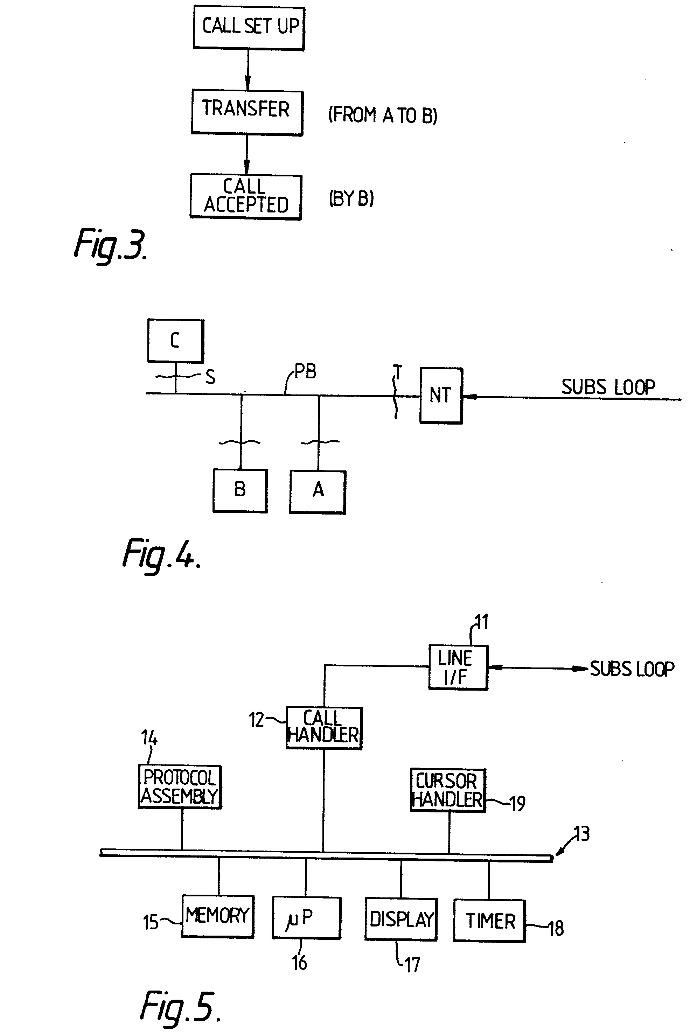

Such a procedure can also apply to ISDN type connections where a number of terminals may be connected to a single interface, or to a secretarial-type arrangement. In either case the directory information can be received on one terminal and the call set up transferred to another terminal within the terminal complex. This is indicated schematically in the small flow diagram, Figure 3.

Figure 4 shows schematically an example of ISDN access; here we have the subscriber's loop connected via one network terminating unit NT to a passive bus PB or other distribution means, via an interface T. Also connected to the bus are a number of terminals A, B, C, via respective interfaces S.

The requirements which have to be satisfied by a network terminal in such a system are :

(a)      ability to access the directory storage unit,

(b)      ability to display, and if necessary "turn the pages" of the directory, i.e. to access successive sections or pages of the information in the directory,

(c)      ability to store the incoming directory information, so that it can be accessed electronically and relevant portions extracted for further processing,

(d)      processing of the extracted information into the appropriate call handling formats,

(e)      directory number store for future use,

(f)      appropriate network interfaces.

A terminal providing these facilities is shown in block schematic form in Figure 5. Here the subscriber's loop is connected via a line interface 11 to a call handler 12 which is itself connected to the terminal's bus 13. The call handler performs all the "switching" functions needed for the terminal, including such functions as responding to tones.

Also connected to the bus 13 are a protocol assembly unit 14, which puts the wanted number information into a form suitable for the control of call setting, the bus 13 being connected in a manner not shown to the line extending to the exchange, which gives the terminal access to the switching equipment of the exchange. Other units connected to the bus 13 are a memory 15 for, inter alia, reception of address information, a microprocessor 16 for controlling the terminal, a display 17 on which the address information can be displayed, and a timer 18. The timer 18 is used, inter alia, when a connection has to be set up at a defined time after reception of the address information. Also connected to the bus 13 there is a cursor handler 19, used to control selection of desired portions of the information received from the directory storage unit.

Applications of the techniques described above include a terminal designed for funds transfer/point of sale systems, in which call processing information stored on a card is read and a call can be set up automatically. This is extended to visiting cards and the like which are readable electronically and have appropriate telephone and/or telex numbers included.

A contemporary trend in telecommunication and related systems is that cryptography plays a key roll in the transfer of information. One such system is Public Key Cryptography, in which the encryption key is published as part of the directory. This is a number which is too long to be memorised and inserted manually, and hence in the application of this invention forms part of the information stored in the directory storage unit. It is then inserted automatically as part of the total call set up procedure.

CLAIMS:

1. A data handling system, which includes a directory storage unit (DSU) accessible to a number of user's lines, characterised in that to obtain the information which may include the address of a wanted line (Y) or other termination a calling user (A) sets up a connection (1) through the system to the directory storage unit (DSU) and signals thereto the identity of the information required, in response to the reception of the identity signals the directory storage unit transmits the required information to a storage device (15) associated with the system control equipment, whereafter the connection (1) to the directory storage unit is broken down, and in which in response to the reception of the required information in the storage device (15) a connection (2) is set up in respect of the required address, either immediately or at a desired but later time, or other operations appropriate to that information are performed.

2. An automatic telecommunication system which includes a directory storage unit (DSU) accessible to a number of subscribers' lines which may be connected to the same exchange or to a number of exchanges (E1, E2, E3, E4) in the system, characterised in that to obtain the address of a wanted line (Y) or other termination connected to the system a calling subscriber (A) sets up a connection (1) through the system to the directory storage unit (DSU) and signals thereto the identity of the wanted line or other termination, in which in response to the reception of the identity signals the directory storage unit signals thereto the identity of the wanted line (Y) or other termination, in which in response to the reception of the identity signals the directory storage unit (DSU) transmits the required address to a storage device (15) in the system control equipment, whereafter the connection (1) to the directory storage unit is broken down, and in which in response to the reception of the required address in the storage device a connection (2) is set up in respect of the required address, either immediately or at a desired but later time.

3. A system as claimed in claim 2, characterised in that the required address as extracted from the directory storage unit (DSU) is also displayed on a display (17) at the calling subscriber's instrument (A), in which if the connection is to be set up immediately the subscriber signals to that effect, whereafter call setting occurs, and in which if the call is to be set up at a desired later time the subscriber signals to that effect, the control equipment in response to such signalling setting up the required connection at the desired time by means of a timer 18.

4. A system as claimed in claim 2 or 3, characterised in that the address as extracted from the directory storage unit in response to a call from a subscriber at one line can be used to set up a connection between two others of the lines or other terminations served by the system.

0178111

1/2

Fig.1.

Fig.2.

2/2

```
┌──────────────┐
│ CALL SET UP  │
└──────┬───────┘
       │
       ▼
┌──────────────┐
│  TRANSFER    │     (FROM A TO B)
└──────┬───────┘
       │
       ▼
┌──────────────┐
│    CALL      │     (BY B)
│  ACCEPTED    │
└──────────────┘
```

*Fig.3.*

*Fig.4.*

*Fig.5.*